# EUROPÄISCHE PATENTSCHRIFT

(11) **EP 4 018 373 B1**
(45) Veröffentlichungstag und Bekanntmachung des Hinweises auf die Patenterteilung: **01.01.2025**
(21) Anmeldenummer: 20760772.2
(22) Anmeldetag: 17.08.2020
(51) Int. Cl.: G06K 19/02, G06K 19/077

(54) **CHIPKARTE**
CHIP CARD
CARTE À PUCE

(30) Priorität: 22.08.2019 DE 102019005934
(43) Veröffentlichungstag der Anmeldung: 29.06.2022
(73) Patentinhaber: Giesecke+Devrient ePayments GmbH, 81677 München (DE)
(72) Erfinder: RIEDL, Josef, 85395 Attenkirchen (DE)
(86) Internationale Anmeldenummer: PCT/EP2020/025376
(87) Internationale Veröffentlichungsnummer: WO 2021/032318

(56) Entgegenhaltungen:
- EP-A1- 1 411 465
- WO-A1-2009/142656
- US-A1- 2006 187 063
- US-B1- 6 631 847

## Beschreibung

Die Erfindung betrifft eine Chipkarte sowie ein Verfahren zu ihrer Herstellung. Insbesondere betrifft die Erfindung eine sogenannte Metallkarte.

Zur Erhöhung der Exklusivität von Chipkarten für sogenannte Prime User werden sogenannte Metallkarten angeboten, in der Regel im üblichen ID-1-Format gemäß der internationalen Norm ISO 7810. Die vorliegende Erfindung ist aber nicht nur auf Metallkarten dieses Formats beschränkt. Bekannt sind Vollmetallkarten, Hybrid-Metallkarten mit einer metallischen Seite und einer Kunststoffseite, sowie Metallkarten, die ein- oder beidseitig mit Kunststoff oder Lack beschichtet oder bedruckt sind.

Soweit solche Karten lediglich zur kontaktbehafteten Kommunikation mit einem Chipmodul ausgestattet sind, dessen Kontaktflächen in einer Oberfläche der Metallschicht oder einer anderen außenliegenden Schicht liegen, ist die Kommunikation mit Metallkarten unproblematisch. Im Falle von Chipkarten, die zur induktiven Kopplung mit einer Transponderspule ausgestattet sind, die also nur oder auch (Dual-Interface-Karte) kontaktlos betrieben werden können, kann die Metallschicht aber die Kommunikation stören oder vollständig behindern. Aus WO 2016/016251 A1 ist beispielsweise eine zweischichtige Dual-Interface-Chipkarte mit Metallschicht und Kunststoffschicht bekannt. Die zwischen der Metallschicht und der Kunststoffschicht angeordnete Transponderspule ist durch eine zwischen der Spule und der Metallschicht angeordnete Ferritschicht gegen störende kapazitiver Einflüsse der Metallschicht abgeschirmt. Jedoch funktioniert die RFID-Übertragung nur einseitig, da die Übertragung auf der anderen Seite der Karte durch die Metallschicht verhindert wird.

Aus WO 2014/113765 A1 ist eine ähnliche Karte bekannt, bei der jedoch das in die Metalloberfläche eingesetzte Chipmodul ein Dual-Interface-Modul ist, d.h. das Chipmodul weist selbst eine kleine Transponderantenne auf, sodass eine Kommunikation auch von der Metallseite her möglich ist. Obwohl die Transponderspule des Dual-Interface-Chipmoduls mit einer größeren Spule in der Chipkartenrückseite gekoppelt ist, die als sogenannte Booster-Antenne fungiert, ist aufgrund des geringen Durchmessers der Transponderspule im Dual-Interface-Chipmodul die von der Kartenvorderseite induzierbare Spannung gering. Entsprechendes gilt für die aus der WO 2018/132404 A1 bekannte Vollmetallkarte, bei der eine Transponderspule mit Chip in einer Durchbrechung der Metallkarte angeordnet ist und dadurch von beiden Seiten aus RFID-Signale empfangen kann.

Eine mehrschichtige Metall-Chipkarte mit einem Transponder großen Durchmessers ist aus WO2017/007468 A1 bekannt. Hier ist die Metallschicht lediglich als Metallinlay vorgesehen, das umfangsseitig von einem Kunststoffrahmen umgeben ist, in welchem die Transponderspule verlegt ist. Auch bei dieser Karte ist ein Empfang von RFID-Signalen von allen Seiten der Metallkarte möglich, aber es besteht bei diesem Aufbau nicht die Möglichkeit, dass sich die Metallschicht über die gesamte Fläche der Karte erstreckt, also von Kartenrand zu Kartenrand.

EP 1411 465 A1 offenbart eine Chipkarte, welche einen Träger aufweist, auf dem eine Antenne angeordnet ist. Die Antenne ist mit einem Chipmodul elektrisch leitend verbunden, um eine kontaktlose oder kontaktgebundene elektrische Kommunikation mit einem Terminal zu ermöglichen. Ferner weist die Chipkarte eine Schicht mit einer Beschriftung und einem Magnetstreifen auf. Die Chipkarte weist auf ihren Außenseiten jeweils eine Schutz-schicht auf.

US 6 631 847 B1 beschreibt eine Chipkarte mit einer Antennenspule, welche aus einem Metallbogen mittels Stanzen oder Ätzen hergestellt ist. Die Antenne ist mit einem Chipmodul elektrisch leitend verbunden. Die Antenne weist ferner bei jeder Windung einen gebogenen Abschnitt auf, welcher bezogen auf die Ebene der Antenne nach außen und/oder nach innen gebogen ist. Somit ist die Antenne derart mit dem Chipmodul verbunden, dass die Windungen der Antenne unter dem Chipmodul zwischen den Verbindungspunkten des Chipmoduls und der Antenne verlaufen.

US 2006/0187063 A1 beschreibt ein Verfahren zum selektiven Entfernen von Metall von einem metallisierten Substrat (z. B. einem metallisierten Polymerfilm). Bei diesem Verfahren wird die metallisierte Oberfläche selektiv einer entmetallisierenden (d. h. oxidierenden) chemischen Lösung ausgesetzt. Die metallisierte Schicht kann mithilfe eines Flexodruckverfahrens, bei dem Druckwalzen verwendet werden, um die Entmetallisierungslösung auf die metallisierte Oberfläche aufzutragen, selektiv der Entmetallisierungslösung ausgesetzt werden.

WO 2009/142656 A1 beschreibt ein Verfahren zur Herstellung einer Transaktionskarte, das das Schneiden eines ersten Metallblechs zur Herstellung eines Kartenkörpers, das Schneiden eines zweiten Metallblechs zur Herstellung einer Rückwand, das Auftragen eines Klebstoffs auf die Rückwand und das Verkleben der Rückwand mit dem Kartenkörper umfasst.

Aufgabe der vorliegenden Erfindung ist es, eine Metall-Chipkarte zur Verfügung zu stellen, die von beiden Seiten Funksignale mit hoher Signalausbeute empfangen kann und die auch als vollflächige Metallkarte ausgebildet werden kann.

Diese Aufgabe wird durch eine Chipkarte sowie ein Verfahren zur Herstellung derselben mit den Merkmalen der unabhängigen Patentansprüche gelöst. In davon abhängigen Ansprüchen sind vorteilhafte Ausgestaltungen und Weiterbildungen angegeben.

Gemäß einem Aspekt umfasst die Chipkarte einen Kartenkörper, der aus einer oder mehreren Schichten besteht und der jedenfalls eine selbsttragende Metallschicht umfasst. Diese Metallschicht kann sich über die gesamte Chipkarte bis zu allen Kanten der Chipkarte erstrecken, aber dies ist nicht zwingend. Die Chipkarte besitzt einen integrierten Schaltkreis bzw. Chip, vorzugsweise in Gestalt eines in die Chipkarte eingelassenen Chipmoduls, sowie eine mit dem Chip gekoppelte Transponderspule. Das besondere ist nun, dass die Windungen der Transponderspule durch die Metallschicht selbst gebildet werden. Die Zwischenräume zwischen den Windungen sind mit Isoliermaterial aufgefüllt.

"Selbsttragend" bedeutet in Bezug auf die Metallschicht, dass es sich nicht etwa um eine gedruckte Metallschicht handelt. Mit metallischer Farbe gedruckte Transponderspulen sind aus dem Stand der Technik vielfach bekannt. Vielmehr handelt es sich bei der selbsttragenden Metallschicht um eine Folie oder auch Platte aus einem Metall, insbesondere einem nicht rostenden Metall, welches der Karte einen besonderen Wert verleihen soll.

Das Isoliermaterial in den Zwischenräumen der Transponderspule soll die Windungen in Bezug auf eine kapazitive Kopplung gegeneinander abschirmen. Als Material kommt dafür beispielsweise Ferrit in Betracht.

Soweit die Metallschicht außen liegt und eine der Hauptflächen des Kartenkörpers bildet, wird diese vorzugsweise mit einer Isolierschicht vollflächig abgedeckt, um eine Kopplung zwischen den Fingern eines Benutzers und den Windungen der Transponderspule zu verhindern. Dies würde ansonsten den Schwingkreis der Transponderspule beeinflussen und die Signalübertragung verhindern. Handelt es sich um einen Voll-Metallkarte, bei der der gesamte Kartenkörper durch die Metallschicht oder mehrere Metallschichten gebildet wird, so kann die Metallschicht oder können die Metallschichten auf beiden Hauptflächen der Chipkarte vollflächig mit einer solchen Isolierschicht abgedeckt werden.

Insbesondere kann die Metallschicht lackiert, bedruckt oder mit einer Folie beschichtet sein, wobei die Beschichtung vorzugsweise mindestens auf einer Seite transparent ist, um den Exklusiveffekt der metallischen Oberfläche für den Betrachter optisch zur Wirkung zu bringen.

Dementsprechend kann die Metallschicht bzw. im Falle mehrerer übereinanderliegender Metallschichten die Gruppe von Metallschichten insgesamt eine Gesamtdicke besitzen, die lediglich 25% oder mehr, vorzugsweise mindestens 50% und besonders bevorzugt mindestens 75% der Dicke des Kartenkörpers betragen. Besonders bevorzugt wird der Kartenkörper vollständig durch die mindestens eine Metallschicht gebildet. Dementsprechend liegt die Gesamtdicke der Metallschicht oder Metallschichten im Falle einer Chipkarte im ID-1-Format zwischen 0,2 und 0,76 mm.

Die Windungen der Transponderspule verlaufen vorzugsweise in einem äußeren Bereich der Chipkarte entlang der Chipkartenaußenkante, um eine möglichst große von der Spule umschlossene Fläche zu erhalten, sodass die durch ein externes Magnetfeld in die Karte induzierte Spannung möglichst hoch ist. Dabei ist es besonders effektiv, wenn die Windungen der Transponderspule eine entlang dem Rand der Chipkarte verlaufende Windung aufweisen, d.h. der Rand der Chipkarte bzw. die Außenkante der Metallschicht begrenzt die äußere Windung der Transponderspule. Auf diese Weise lassen sich die Spulenwindungen mit maximalem Durchmesser anordnen. Für alle Ausführungsformen der Erfindung gilt insoweit, dass die durch die Metallschicht gebildeten Windungen sowie die mit Isoliermaterial aufgefüllten Zwischenräume zwischen den Windungen in ihrer Breite so eingestellt werden, dass die Transponderspule die gewünschte Resonanzfrequenz aufweist. Eine typische Resonanzfrequenz für RFID-Transponderspulen in Chipkarten liegt bei 13,56 MHz für eine Transponderspule mit 3 bis 10 Windungen.

Wie bereits erwähnt, wird die Metallschicht vornehmlich aus ästhetischen Gründen in die Chipkarte integriert und soll zumindest einseitig, vorzugsweise beidseitig für den Betrachter sichtbar sein. Das bedeutet auch, dass die mit Isoliermaterial aufgefüllten Zwischenräume zwischen den Windungen für den Betrachter sichtbar sein können.

Insoweit kann es von Vorteil sein, wenn das Isoliermaterial sich optisch von dem Metall nicht oder nicht wesentlich unterscheidet.

Sofern aber das Isoliermaterial in den Zwischenräumen optisch auffällig ist, kann dieser Effekt ästhetisch aufgegriffen werden in der Weise, dass die Windungen der Transponderspule wie ineinander geschachtelte Rahmen wirken. Dazu verlaufen die Windungen vorteilhaft parallel zueinander und parallel zur Außenkante der Chipkarte, und zwar vorzugsweise über den gesamten Umfang der Karte.

Um diesen einheitlichen optischen Eindruck zu gewährleisten, ist es vorteilhaft, in der Chipkarte ein Chipmodul derart anzuordnen, dass etwaige Unstetigkeiten im Verlauf der Spulenwindungen verdeckt werden. Konkret wird das Chipmodul vorzugsweise derart über den Windungen der Transponderspule angeordnet, dass bei Betrachtung der Chipkarte von oben auf im Bereich des Chipmoduls ausschließlich Abschnitte der Windungen der Transponderspule sichtbar sind, die parallel zu einer jeweils nächstliegenden Außenkante der Metallschicht und damit parallel zum nächstliegenden Rand der Chipkarte verlaufen. Im weiteren Verlauf der Windungen liegen diese, wie zuvor erwähnt, parallel zueinander und parallel zum Rand der Chipkarte, sodass sich der Eindruck der ineinander geschachtelten Rahmen ergibt.

Problematisch ist die vorgenannte Anordnung des Chipmoduls in Bezug auf die am Rand der Chipkarte verlaufende Windung, weil diese außenliegende Windung natürlich nicht vollständig umläuft (das gäbe einen Kurzschluss), sondern an einer Stelle von der nächst benachbarten Windung in Gestalt eines sich bis zur Außenkante der Chipkarte erstreckenden Schlitzes getrennt ist. Kontaktflächen des Chipmoduls zur kontaktbehafteten Datenübertragung erstrecken sich normbedingt nicht bis zum Rand der Chipkarte, sodass dieser Schlitz für den Betrachter sichtbar bleibt und störend wirken könnte. Eine alternative Ausgestaltung der Transponderspule sieht zur Vermeidung des störenden Schlitzes vor, dass die außenliegende Transponderspule gerade nicht am Rand der Chipkarte, sondern beabstandet dazu verläuft. Dann ist es möglich, alle Unstetigkeiten im Verlauf der Spulenwindungen durch geeignete Anordnung des Chipmoduls zu verdecken.

In einer Weiterbildung kann ein zentraler Bereich der Metallschicht ausgespart und mit Kunststoff gefüllt sein. Das ist der Bereich, der von den Windungen der Transponderspule umschlossen wird. Dieser zentrale Bereich kann mit besonderen Sicherheitsmerkmalen ausgestattet werden. Im Übrigen kann die Oberfläche der Metallschicht mit dem oder ohne den ausgesparten zentralen Bereich mit Texturelementen versehen werden, etwa mit Logos, Mustern und/ oder alphanumerischen Zeichen, beispielsweise durch Lasern, Fräsen oder Sticheln.

Nachfolgend wird die Erfindung beispielhaft anhand der begleitenden Zeichnungen erläutert. Darin zeigen:
- Fig. 1.: eine Chipkarte gemäß einem Ausführungsbeispiel der Erfindung,
- Fig. 2: schematisch eine erste Variante zur relativen Anordnung von Chipmodul und Spulenwindungen,
- Fig. 3A: eine zweite Variante zur relativen Anordnung von Chipmodul und Spulenwindungen,
- Fig. 3B: die Anordnung gemäß Fig. 3A im Querschnitt,
- Fig. 4: die erste Variante gemäß Fig. 2 mit freigestanztem zentralen Bereich und
- Fig. 5: die zweite Variante gemäß Fig. 3A mit freigestanztem zentralen Bereich.

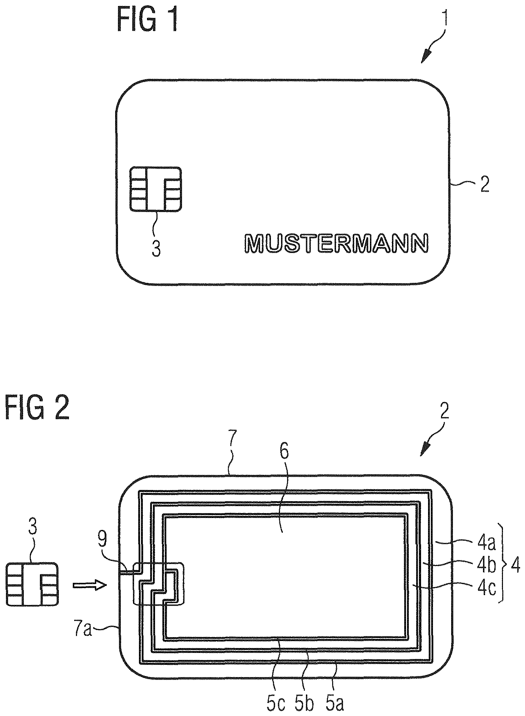

Fig. 1 zeigt ein Ausführungsbeispiel einer Metall-Chipkarte 1 in Draufsicht. Die metallische Oberfläche der Metallschicht 2 ist für den Betrachter sichtbar. Die Metallschicht 2 erstreckt sich über die gesamte Fläche der Chipkarte 1, abgesehen von dem Bereich der Chipkarte 1, in den ein Chipmodul 3 integriert und mit seinen Kontaktflächen einen Teil der Oberfläche der Chipkarte 1 bildet. Die metallische Oberfläche der Metallschicht 2 ist außerhalb der Kontaktflächen des Chipmoduls 3 mit einem transparenten Lack versehen. Sie kann stattdessen oder zusätzlich bedruckt sein, und/ oder Texturen können in die metallische Oberfläche eingebracht sein, wie die beispielhafte Textur "MUSTERMANN".

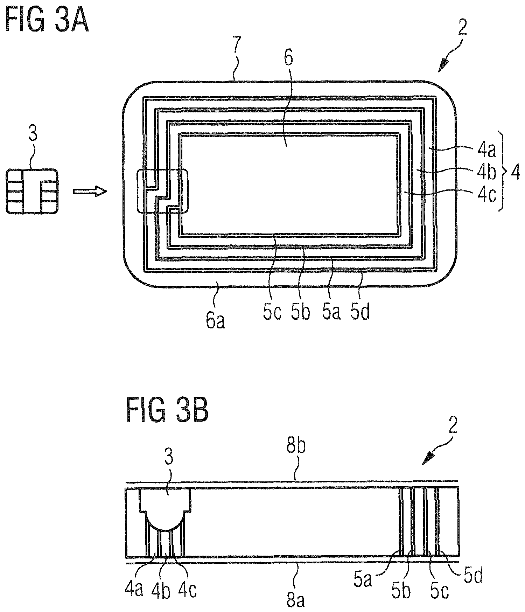

In der Metallschicht 2 ist eine hier nicht erkennbare und in Bezug auf die nachfolgenden Figuren 2 und 3 genauer beschriebene Transponderspule 4 integriert, und die in den Figuren 2 und 3 ebenfalls genauer dargestellten Zwischenräume 5a - 5c zwischen den Windungen 4a, 4b der Transponderspule 4 sind mit Isoliermaterial gefüllt. Weil jedoch der optische Eindruck des Isoliermaterials sehr ähnlich zu dem der Metallschicht 2 ist, fällt die Transponderspule 4 bei Betrachtung der Chipkarte 1 in Draufsicht kaum auf und ist daher in der Darstellung gemäß Fig. 1 nicht zu sehen.

Fig. 2 zeigt die Metallschicht 2 schematisch in Aufsicht derart, dass drei Windungen 4a, 4b, 4c der Transponderspule 4 und die Zwischenräume 5a, 5b zwischen den Windungen 4a bis 4c sowie ein weiterer Zwischenraum 5c, der die innerste Windung 4c von einem zentralen Bereich 6 der Metallschicht 2 trennt, zu sehen sind. Die außenliegende Windung 4a verläuft an der Außenkante 7 der Metallschicht 2 und damit am Rand der Chipkarte 1 gemäß Fig. 1, weil sich die Metallschicht 2 bei dem hier beschriebenen Ausführungsbeispiel über die gesamte Chipkarte 1 erstreckt. Das ist aber keineswegs zwingend. Die Metallschicht 2 kann genauso gut ein Inlay in der Chipkarte 1 dergestalt sein, dass es sich nicht bis zum Rand der Chipkarte 1 erstreckt.

Das Chipmodul 3 wird so über den Windungen der Transponderspule angeordnet, dass die in Fig. 2 im linken Bereich der Metallschicht 2 auftretenden Unstetigkeitsstellen der Windungen von dem Chipmodul 3 verdeckt werden. Bei Betrachtung der Chipkarte 1 von oben auf das Chipmodul 3 sind dann ausschließlich Abschnitte der Windungen 4a bis 4c sichtbar, die parallel zu der nächstliegenden Außenkante 7a der Metallschicht 2 verlaufen.

Die beiden Enden der durch die Windungen 4a bis 4c gebildeten Transponderspule 4 werden von unten mit dem Chipmodul 3 elektrisch leitend verbunden. Zwischen dem Spulenende der außen liegenden Windung 4a und der mittleren Windung 4b erstreckt sich ein Schlitz 9 bis zur Außenkante 7a der Metallschicht 2, der durch das Chipmodul 3 nicht verdeckt wird. Fig. 3A zeigt insoweit eine zweite Variante zur Gestaltung der Transponderspule 4, bei der beide Enden der Transponderspule 4 unter dem Chipmodul 3 zu liegen kommen. Hier verläuft die äußere Windung 4a nicht unmittelbar an der Außenkante 7 der Metallschicht 2, sondern die gesamte Transponderspule 4 ist etwas nach innen versetzt. Dementsprechend ergibt sich ein weiterer Zwischenraum 5d zwischen der äußeren Windung 4a und einem äußeren Bereich 6a der Metallschicht 2, der genauso mit Isoliermaterial gefüllt wird, wie der Zwischenraum 5c, der den zentralen Bereich 6 der Metallschicht 2 von der innenliegenden Windung 4c trennt. Wie Fig. 3A zu entnehmen ist, kann diese Anordnung so gestaltet werden, dass kein mit Isoliermaterial gefüllter Schlitz zur Außenkante 7 der Metallschicht 2 führt, anders als in der vorbeschriebenen ersten Variante gemäß Fig. 2.

Fig. 3B zeigt schematisch die Anordnung gemäß Fig. 3A im Querschnitt. Insbesondere ist daran zu erkennen, dass es sich hier um eine Metallschicht 2 für eine Vollmetallkarte handelt, bei der der Kartenkörper allein durch die Metallschicht 2 gebildet wird. Ebenfalls ist schematisch dargestellt, wie das Chipmodul 3 in eine Kavität der Metallschicht 2 eingefügt ist. Die Metallschicht 2 kann alternativ durch mehrere Metallschichten gebildet werden, und die eine oder mehrere Metallschichten können mit weiteren Schichten, insbesondere Kunststoffschichten, die transparent und/ oder opak sein können, einen mehrschichtigen Kartenkörper bilden.

Angedeutet in Fig. 3B ist mit Schutzschichten 8a und 8b eine vorzugsweise transparente oder transluzente Lackschicht auf den einander gegenüberliegenden Hauptflächen der Metallschicht 2. Eine oder beide der Schutzschichten 8a, 8b können durch eine Druckschicht und/ oder laminierte Kunststofffolie ersetzt werden. Diese können ebenfalls transparent oder transluzent oder zumindest eine Schicht ggf. auch vollständig opak sein. In Bezug auf die Metallschicht fungieren die Schutzschichten 8a, 8b auch als Isolierschichten, die ein Verstimmen des Schwingkreises durch Berührung verhindern.

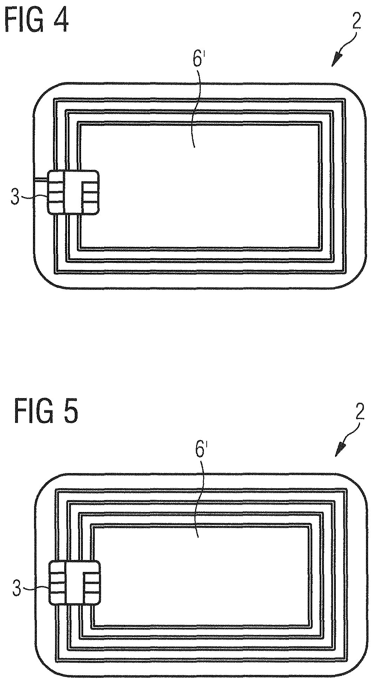

Fig. 4 zeigt die Metallschicht 2 wie in Fig. 2, bei der jedoch der zentrale Bereich 6 ausgestanzt und durch eine Kunststofffüllung 6' ersetzt ist. Fig. 5 zeigt entsprechend die Metallschicht 2 wie in Fig. 3A dargestellt, wobei ebenfalls der zentrale Bereich 6 der Metallschicht 2 ausgespart und mit Kunststoff 6' aufgefüllt ist.

Metallkarten gemäß den vorstehenden Ausführungsbeispielen sind zu beiden Seiten RFID-fähig.

## Patentansprüche

1. Chipkarte (1), umfassend
- einen Kartenkörper, der aus einer oder mehreren Schichten besteht, von denen mindestens eine Schicht eine Metallschicht (2) ist,
- einen integrierten Schaltkreis (3) und
- eine mit dem integrierten Schaltkreis gekoppelte Transponderspule (4), wobei die Transponderspule (4) Windungen (4a, 4b, 4c) und Zwischenräume (5a, 5b) zwischen den Windungen (4a, 4b, 4c) aufweist, **wobei** die Windungen (4a, 4b, 4c) der Transponderspule (4) durch die mindestens eine Metallschicht (2) gebildet sind, wobei die Zwischenräume (5a, 5b) zwischen den Windungen (4a, 4b, 4c) mit Isoliermaterial aufgefüllt sind, **dadurch gekennzeichnet, dass** der Kartenkörper zwei einander gegenüberliegende Hauptflächen besitzt, und wobei mindestens eine der Hauptflächen durch die mindestens eine Metallschicht (2) gebildet und mit einer transparenten oder transluzenten Deckschicht (8a) vollflächig abgedeckt ist, welche eine Kopplung zwischen den Fingern eines Benutzers und den Windungen (4a, 4b, 4c) der Transponderspule (4) verhindert.

2. Chipkarte nach Anspruch 1, wobei das Isoliermaterial Ferrit ist.

3. Chipkarte nach einem der Ansprüche 1 bis 2, wobei die mindestens eine Metallschicht (2) lackiert, bedruckt oder mit einer Folie beschichtet ist.

4. Chipkarte nach einem der Ansprüche 1 bis 3, wobei Texturelemente in die Oberfläche der mindestens einen Metallschicht eingebracht sind.

5. Chipkarte nach einem der Ansprüche 1 bis 4, wobei der Kartenkörper eine Dicke besitzt und die mindestens eine Metallschicht (2) insgesamt eine Gesamtdicke besitzt, wobei die Gesamtdicke der mindestens einen Metallschicht (2) mindestens 25%, vorzugsweise mindestens 50%, besonders bevorzugt mindestens 75% der Dicke des Kartenkörpers beträgt.

6. Chipkarte nach Anspruch 5, wobei die Gesamtdicke der mindestens einen Metallschicht (2) in einem Bereich von 0,2 und 0,76 mm liegt.

7. Chipkarte nach einem der Ansprüche 1 bis 6, wobei der Kartenkörper vollständig durch die mindestens eine Metallschicht (2) gebildet wird.

8. Chipkarte nach einem der Ansprüche 1 bis 7, wobei die Windungen (4a, 4b, 4c) der Transponderspule (4) eine entlang einer Außenkante (7) der Metallschicht (2) verlaufende Windung (4a) aufweisen.

9. Chipkarte nach einem der Ansprüche 1 bis 7, wobei die Windungen (4a, 4b, 4c) der Transponderspule (4) eine außenliegende Windung (4a) umfassen, die beabstandet zu einer Außenkante (7) der Metallschicht (2) verläuft.

10. Chipkarte nach einem der Ansprüche 1 bis 9, wobei ein Chipmodul (3) derart über den Windungen (3a, 3b, 3c) der Transponderspule angeordnet ist, dass bei Betrachtung der Chipkarte (1) von oben im Bereich des Chipmoduls (3) ausschließlich Abschnitte der Windungen (4a, 4b, 4c) der Transponderspule (4) sichtbar sind, die parallel zu einer jeweils nächstliegenden Außenkante (7a) der Metallschicht (2) verlaufen.

11. Chipkarte nach einem der Ansprüche 1 bis 10, wobei das Chipmodul (3) den integrierten Schaltkreis und Kontaktflächen zur kontaktbehafteten Datenübertragung aufweist.

12. Chipkarte nach einem der Ansprüche 1 bis 11, wobei ein zentraler Bereich (6) der mindestens einen Metallschicht (2) ausgespart und mit Kunststoff (6') gefüllt ist.

13. Verfahren zur Herstellung einer Chipkarte nach einem der Ansprüche 1 bis 12, wobei die Windungen (4a, 4b, 4c) der Transponderspule (4) in der mindestens einen Metallschicht (2) durch Entfernen von Material in einem den Zwischenräumen (5a, 5b) zwischen den Windungen (4a, 4b, 4c) entsprechenden Bereich erzeugt werden, wobei dieser Bereich anschließend mit dem Isoliermaterial gefüllt wird, wobei der Kartenkörper zwei einander gegenüberliegende Hauptflächen besitzt, und wobei mindestens eine der Hauptflächen durch die mindestens eine Metallschicht (2) gebildet und mit einer transparenten oder transluzenten Deckschicht (8a) vollflächig abgedeckt wird, welche eine Kopplung zwischen den Fingern eines Benutzers und den Windungen (4a, 4b, 4c) der Transponderspule (4) verhindert.

14. Verfahren nach Anspruch 13, wobei ein zentraler Bereich (6) der mindestens einen Metallschicht (2) entfernt und mit Kunststoff (6') aufgefüllt wird.

## Claims

1. Chip card (1) comprising
- a card body consisting of one or more layers, of which at least one layer is a metal layer (2),
- an integrated circuit (3) and
- a transponder coil (4) coupled with the integrated circuit, the transponder coil (4) having windings (4a, 4b, 4c) and interstices (5a, 5b) between the windings (4a, 4b, 4c), **wherein** the windings (4a, 4b, 4c) of the transponder coil (4) are formed by the at least one metal layer (2), the interstices (5a, 5b) between the windings (4a, 4b, 4c) being filled with insulating material, **characterized in that** the card body possesses two mutually opposite main faces, and with at least one of the main faces being formed by the at least one metal layer (2) and being covered over its full area with a transparent or translucent top layer (8a) which prevents coupling between the fingers of a user and the windings (4a, 4b, 4c) of the transponder coil (4).

2. Chip card according to Claim 1, wherein the insulating material is ferrite.

3. Chip card according to either of Claims 1 and 2, wherein the at least one metal layer (2) is varnished, printed or coated with a foil.

4. Chip card according to any of Claims 1 to 3, wherein texture elements are incorporated into the surface of the at least one metal layer.

5. Chip card according to any of Claims 1 to 4, wherein the card body possesses a thickness and the at least one metal layer (2) overall possesses a total thickness, the total thickness of the at least one metal layer (2) being at least 25%, preferably at least 50%, more preferably at least 75% of the thickness of the card body.

6. Chip card according to Claim 5, wherein the total thickness of the at least one metal layer (2) is in a range of 0.2 and 0.76 mm.

7. Chip card according to any of Claims 1 to 6, wherein the card body is formed entirely by the at least one metal layer (2).

8. Chip card according to any of Claims 1 to 7, wherein the windings (4a, 4b, 4c) of the transponder coil (4) have a winding (4a) running along an outer edge (7) of the metal layer (2).

9. Chip card according to any of Claims 1 to 7, wherein the windings (4a, 4b, 4c) of the transponder coil (4) comprise an outer winding (4a) which runs at a distance from an outer edge (7) of the metal layer (2).

10. Chip card according to any of Claims 1 to 9, wherein a chip module (3) is arranged over the windings (3a, 3b, 3c) of the transponder coil in such a way that on viewing of the chip card (1) from above, in the region of the chip module (3), portions of the windings (4a, 4b, 4c) of the transponder coil (4) that are visible are exclusively those which run parallel to a respectively nearest outer edge (7a) of the metal layer (2).

11. Chip card according to any of Claims 1 to 10, wherein the chip module (3) comprises the integrated circuit and contact faces for contact data transmission.

12. Chip card according to any of Claims 1 to 11, wherein a central region (6) of the at least one metal layer (2) is recessed and filled with plastic (6').

13. Method for producing a chip card according to any of Claims 1 to 12, wherein the windings (4a, 4b, 4c) of the transponder coil (4) are generated in the at least one metal layer (2) by removal of material in a region corresponding to the interstices (5a, 5b) between the windings (4a, 4b, 4c), this region being subsequently filled with the insulating material, the card body possessing two mutually opposite main faces, and at least one of the main faces being formed by the at least one metal layer (2) and being covered over its full area with a transparent or translucent top layer (8a) which prevents coupling between the fingers of a user and the windings (4a, 4b, 4c) of the transponder coil (4).

14. Method according to Claim 13, wherein a central region (6) of the at least one metal layer (2) is removed and filled with plastic (6').

## Revendications

1. Carte à puce (1), comprenant
- un corps de carte qui est constitué d'une ou plusieurs couches, dont au moins une couche est une couche métallique (2),
- un circuit intégré (3) et
- une bobine de transpondeur (4) couplée au circuit intégré, la bobine de transpondeur (4) comportant des spires (4a, 4b, 4c) et des espaces (5a, 5b) entre les spires (4a, 4b, 4c), les spires (4a, 4b, 4c) de la bobine de transpondeur (4) étant formées par l'au moins une couche métallique (2), les espaces (5a, 5b) entre les spires (4a, 4b, 4c) étant remplis de matériau isolant, **caractérisée en ce que** le corps de carte possède deux surfaces principales opposées, et au moins l'une des surfaces principales étant formée par au moins une couche métallique (2) et recouverte sur toute la surface d'une couche de couverture (8a) transparente ou translucide, qui empêche une liaison entre les doigts d'un utilisateur et les spires (4a, 4b, 4c) de la bobine de transpondeur (4).

2. Carte à puce selon la revendication 1, dans laquelle le matériau isolant est de la ferrite.

3. Carte à puce selon l'une des revendications 1 à 2, dans laquelle l'au moins une couche métallique (2) est peinte, imprimée ou revêtue d'un film.

4. Carte à puce selon l'une des revendications 1 à 3, dans laquelle des éléments de texture sont incorporés dans la surface de l'au moins une couche métallique.

5. Carte à puce selon l'une des revendications 1 à 4, dans laquelle le corps de carte possède une épaisseur et l'au moins une couche métallique (2) possède dans l'ensemble une épaisseur totale, l'épaisseur totale de l'au moins une couche métallique (2) étant d'au moins 25 %, préférablement d'au moins 50 %, particulièrement préférablement d'au moins 75 % de l'épaisseur du corps de carte.

6. Carte à puce selon la revendication 5, dans laquelle l'épaisseur totale de l'au moins une couche métallique (2) se situe dans une plage de 0,2 à 0,76 mm.

7. Carte à puce selon l'une des revendications 1 à 6, dans laquelle le corps de carte est entièrement formé par l'au moins une couche métallique (2).

8. Carte à puce selon l'une des revendications 1 à 7, dans laquelle les spires (4a, 4b, 4c) de la bobine de transpondeur (4) présentent une spire (4a) s'étendant le long d'un bord extérieur (7) de la couche métallique (2).

9. Carte à puce selon l'une des revendications 1 à 7, dans laquelle les spires (4a, 4b, 4c) de la bobine de transpondeur (4) comprennent une spire extérieure (4a) qui s'étend à distance d'un bord extérieur (7) de la couche métallique (2).

10. Carte à puce selon l'une des revendications 1 à 9, dans laquelle un module à puce (3) est disposé au-dessus des spires (3a, 3b, 3c) de la bobine de transpondeur de façon que, lorsque la carte à puce (1) est vue de dessus dans la zone du module à puce (3), seules des sections des spires (4a, 4b, 4c) de la bobine de transpondeur (4) soient visibles, lesquelles sont parallèles au bord d'attaque (7a) le plus proche de la couche métallique (2).

11. Carte à puce selon l'une des revendications 1 à 10, dans laquelle le module à puce (3) présente le circuit intégré et des surfaces de contact pour la transmission de données par contact.

12. Carte à puce selon l'une des revendications 1 à 11, dans laquelle une zone centrale (6) de l'au moins une couche métallique (2) est évidée et remplie de matière plastique (6').

13. Procédé de fabrication d'une carte à puce selon l'une des revendications 1 à 12, dans lequel les spires (4a, 4b, 4c) de la bobine de transpondeur (4) dans l'au moins une couche métallique (2) sont obtenues par enlèvement de matière dans une zone correspondant aux espaces (5a, 5b) entre les spires (4a, 4b, 4c), cette zone étant ensuite remplie de matériau isolant, le corps de la carte possédant deux faces principales opposées, et au moins l'une des surfaces principales étant formée par l'au moins une couche métallique (2) et recouverte sur toute sa surface d'une couche transparente ou translucide (8a) empêchant une liaison entre les doigts d'un utilisateur et les spires (4a, 4b, 4c) de la bobine de transpondeur (4).

14. Procédé selon la revendication 13, dans lequel une zone centrale (6) de l'au moins une couche métallique (2) est retirée et remplie de matière plastique (6').
